# FASCICULE DE BREVET EUROPEEN

(11) **EP 0 670 507 B1**
(45) Date de publication et mention de la délivrance du brevet: **26.01.2000**
(21) Numéro de dépôt: 95400448.7
(22) Date de dépôt: 02.03.1995
(51) Int. Cl.: G02B 6/30, G02B 6/38

(54) **Procédé de réalisation d'un ensemble de connexion optique multivoies, notamment pour fibres optiques**
Verfahren zur Bildung einer optischen Mehrweg-Verbindungsanordnung, insbesondere für optische Fasern
Method of forming an optical multiway connection assembly, in particular for optical fibres

(30) Priorité: 03.03.1994 FR 9402458
(43) Date de publication de la demande: 06.09.1995
(73) Titulaire: FRANCE TELECOM, 75015 Paris (FR)
(72) Inventeur: Boscher, Daniel, F-22560 Trebeurden (FR)
(74) Mandataire: Martin, Jean-Jacques

(56) Documents cités:
- EP-A- 0 249 237
- EP-A- 0 514 722
- EP-A- 0 571 924
- FR-A- 2 660 443

## Description

La présente invention concerne le domaine des systèmes de communication à base de fibres optiques.

Plus précisément, la présente invention concerne le domaine des moyens de connexion optique multivoies conçus pour connecter simultanément plusieurs fibres optiques à un composant d'optique planaire, ou plusieurs fibres optiques d'un cable à plusieurs fibres d'un autre câble.

Jusqu'à présent l'utilisation de fibres optiques a été principalement réservée aux ensembles de transmission longue distance, et aux réseaux interurbains et intercentraux.

Cependant, les fibres optiques vont maintenant de plus en plus être utilisées dans des réseaux de distribution avec des terminaisons dans des chambres de distribution, dans des locaux d'immeuble, et à terme dans les foyers eux-mêmes.

Le nombre de clients concernés devenant de plus en plus grand, l'aspect économique global du réseau prend une importance capitale.

On voit alors apparaître deux scénarios opposés faisant appel à deux types d'architecture, pour la conception de ces réseaux.

Selon le premier scénario, on utilise, grâce à des multiplexeurs, coupleurs, séparateurs, un seul canal descendant pour de multiples abonnés.

Le coût du composant émission et de la fibre cablée est ainsi partagé par le nombre d'abonnés desservis.

Selon le second scénario, au contraire on utilise une fibre par usage, mais un traitement collectif des composants émission et réception. Ainsi on simplifie la gestion du réseau et on économise par le facteur d'intégration des barettes utilisées.

Ces deux options opposées font nécessairement appel à :
- un couplage de composants émission et récepton à des coupleurs, et à des séparateurs puis aux fibres elles-mêmes,
- un couplage des barettes de composants émission à des guides puis aux fibres.

Si ces fonctions sont aujourd'hui réalisées par assemblage d'éléments discrets, le coût de ceux-ci, les longueurs de fibres intermédiaires utilisées, les connecteurs nécessaires, les volumes associés, les rendent à très court terme non compétitifs par rapport à la technique d'optique planaire et de ses fonctions associées appelée communément OEIC.

Le principe bien connu de cette technique d'optique planaire, consiste à réaliser des guides optiques de géométrie appropriée sur des substrats plans, qui peuvent être par exemple du verre, du silicium, de la silice, du niobate de lithium, ou même des matériaux polymères.

Comme l'indique l'article "Status of glass and silicon-based technologies for passive components. Martin Mac Court IOOC 93", trois techniques sont aujourd'hui proposées pour opérer l'alignement d'une fibre optique avec l'axe d'un guide optique ou d'une seconde fibre et assurer le maintien en position relative, après alignement.

La première technique consiste en un alignement dynamique par optimisation de puissance transmise fibre à guide ou fibre à fibre, puis collage.

La seconde technique consiste en un alignement statique par réalisation de rainure en Vé de très haute précision par attaque sélective sur un substrat.

La troisième technique consiste en un alignement semi-statique, en réalisant un collage de fibres dans des rainures en Vé de grande précision et micropositionnement des plaquettes réalisées devant un substrat.

Cependant, ces diverses solutions ne donnent pas totalement satisfaction.

La première solution nécessite un temps de mise en oeuvre important et qui est proportionnel au nombre de fibres de sortie alignées.

La réalisation de Vé de grande précision dans un substrat, requise pour la mise en oeuvre de la seconde et de la troisième solutions, exige une technologie lourde et coûteuse.

On peut souligner que les techniques jusqu'ici proposées, rappelées ci-dessus, présentent en outre les inconvénients majeurs de ne pas permettre la déconnexion des fibres, de ne pas présenter une bonne stabilité à l'environnement et de ne pas permettre d'obtenir aisément des taux de réflexion faibles du composant.

Le document EP-A-0514722 décrit un connecteur optique multivoies. Plus précisément, ce document divulgue un embout de connexion optique multivoies, qui comprend d'une part une embase pourvue de moyens de positionnement mécaniques aptes à coopérer avec ceux d'un support pour définir une position univoque entre ceux-ci, et d'autre part sur une face commune au moins deux sorties optiques disposées selon une configuration et une position prédéterminée précises par rapport auxdits moyens de position mécaniques.

Le document FR-A-2660443 décrit un procédé de couplage collectif de guides de lumière. Il montre en particulier un embout comportant au moins deux sorties optiques ménagées au sein d'une plaque de connexion optique multivoies fixée rigidement sur une embase.

La présente invention a maintenant pour but de perfectionner les dispositifs de connexion optique multivoies pour fibres optiques.

Plus précisément, des buts auxiliaires de l'invention sont de :
- réduire les coûts de connexion, par rapport à la technique antérieure,
- autoriser une déconnexion des fibres optiques,
- permettre un collage sur chantier,
- permettre des taux de réflexion faibles, et
- obtenir des tenues à l'environnement supérieures aux produits existants.

Ce but est atteint selon l'invention grâce à un procédé tel que défini dans la revendication indépendante qui suit.

Pour procéder à la connexion d'un câble à fibres optiques multiples sur un système associé, second câble à fibres optique multiples ou composant d'optique planaire, il suffit d'équiper ledit câble et ledit système associé d'un tel ensemble comprenant une plaquette de connexion optique multivoies et un support fixés dans une position relative définie avec précision et d'assembler ces deux ensembles grâce à leurs moyens de positionnement mécanique respectifs.

Dans le cadre de l'invention, l'embout de référence peut être formé d'un embout de référence universel s'il est demandé de connecter l'ensemble plaquette de connexion/support à une pluralié potentielle d'ensembles complémentaires. Dans ce cas, lesdits ensembles complémentaires sont eux-mêmes réalisés à partir du même embout de référence universel.

Cependant, selon une variante, l'embout de référence peut ètre formé d'un ensemble comprenant une plaquette de connexion et un support fixés préalablement de façon arbitraire, lorsque l'universalité de la connexion n'est pas demandée.

Selon une caractéristique avantageuse de l'invention, ladite configuration prédéterminée des sorties optiques de la plaquette de connexion correspond à une disposition coplanaire des axes de ces sorties.

Selon une autre caractéristique avantageuse de l'invention, les moyens de positionnement mécanique complémentaires comprennent, d'une part une pige cylindrique de précision sur l'un du support ou de l'embase de référence et d'autre part une rainure en Vé sur l'autre de l'embase de référence ou du support.

Selon une autre caractéristique avantageuse de l'invention, les moyens de positionnement mécanique complémentaires comprennent en outre d'une part une pige cylindrique de précision sur l'un du support ou de l'embase de référence et d'autre part un plan d'appui sur l'autre de l'embase de référence ou du support.

Selon une autre caractéristique avantageuse de l'invention, les deux piges cylindriques sont prévues sur le support ou sur l'embase de référence, tandis que la rainure en Ve et le plan d'appui sont prévus sur l'autre de l'embase de référence ou du support.

Selon une autre caractéristique avantageuse de l'invention, les deux sorties alignées de la plaque de référence comprennent une sortie située sensiblement dans le plan de symétrie de ladite configuration prédéterminée et une seconde sortie éloignée de ce plan de symétrie.

Selon une autre caractéristique avantageuse de l'invention, le plan de symétrie de ladite configuration prédéterminée coïncide sensiblement avec le plan de symétrie de la rainure en Ve et/ou de la pige cylindrique associée.

D'autres caractéristiques, buts et avantages de la présente invention apparaitront à la lecture de la description détaillée qui va suivre, et en regard des dessins annexés donnés à titre d'exemples non limitatifs et sur lesquels :
- la figure 1 représente une vue schématique en perspective de deux ensembles d'un système de connexion optique multivoies conforme à la présente invention, avant assemblage de ceux-ci,
- la figure 2 représente une vue latérale en bout de l'un de ces ensembles,
- la figure 3 représente une vue partielle en coupe longitudinale du même ensemble,
- la figure 4 représente une étape intermédiaire de fabrication de l'un des ensembles de connexion,
- la figure 5 représente une vue en bout des éléments illustrés sur la figure 4, au cours de la même étape,
- les figures 6 et 7 représentent des vues schématiques en perspective de deux embouts de référence utilisés dans le cadre de la présente invention, et
- la figure 8 représente une variante de réalisation d'un support conforme à la présente invention.

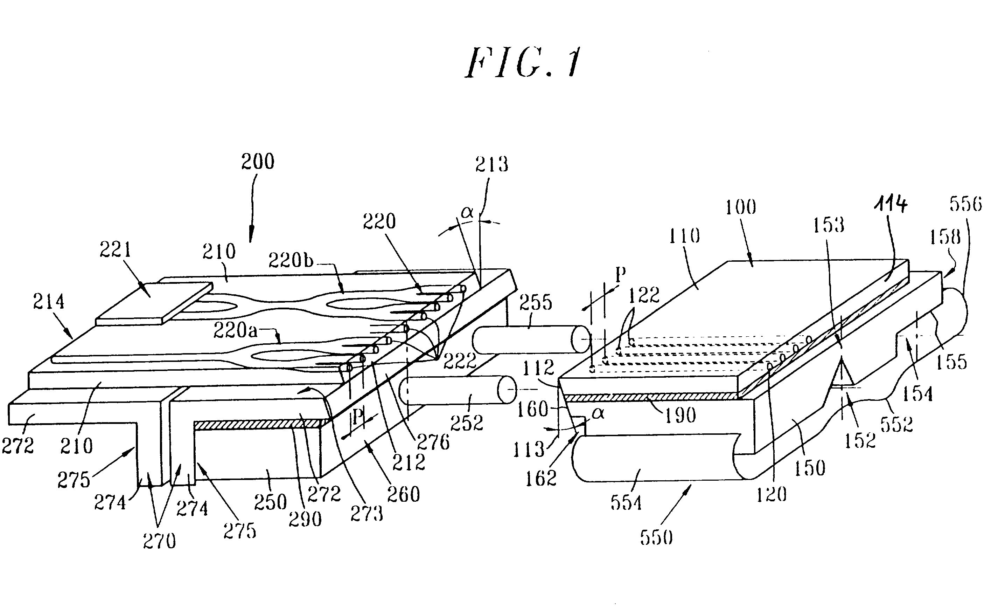

On a représenté sur la figure 1 annexée, un système de connexion conforme à la présente invention, comprenant d'une part un ensemble connecteur 100 adapté pour recevoir plusieurs fibres optiques et d'autre part un ensemble 200 comprenant une plaquette 210 pourvue d'un même nombre de guides optiques 220.

Chacun des ensembles 100 et 200 comprend une plaquette 110, 210 placée sur un support 150, 250.

Les plaquettes 110, 210 possèdent chacune plusieurs sorties optiques 122, 222 disposées sur une face commune 112, 212 des plaquettes 110, 210 selon une configuration prédéterminée et avec un pas p contrôlé avec précision. Plus précisément, selon le mode de réalisation préférentiel représenté sur les figures annexées, ladite configuration prédéterminée des sorties optiques 122, 222 correspond à une disposition coplanaire des axes desdites sorties. Par ailleurs, le pas p des sorties optiques 122, 222, est identique pour les deux plaquettes 110, 210 formant respectivement les deux ensembles 100, 200.

Les supports 150, 250, comprennent quant à eux des moyens de positionnement mécanique complémentaires 152, 155 et 252, 255 respectivement, qui seront décrits plus en détail par la suite, et adaptés pour définir une position univoque entre ces deux supports 150 et 250.

On va maintenant décrire le processus de fabrication préférentiel de l'ensemble connecteur 100 adapté pour recevoir plusieurs fibres optiques. Pour cela, il faut tout d'abord réaliser la plaquette 110 plane et généralement parallélépipédique comprenant différentes ferrules 120 d'axes parallèles coplanaires.

Ces ferrules 120 possèdent un diamètre extérieur D inférieur au pas p des sorties optiques et un diamètre interne d, typiquement de l'ordre de 126µm, adapté au diamètre externe des fibres optiques à recevoir.

L'homme de l'art sait réaliser des ferrules de précision pour la réception de fibres optiques, en particulier grâce aux techiques connues de fibrage. Le processus de fabrication de telles ferrules 120 ne sera donc pas décrit par la suite. En particulier, l'homme de l'art sait réaliser des ferrules en silice dont le diamètre extérieur D, le diamètre intérieur d et l'excentrement entre le diamètre intérieur d et le diamètre extérieur D sont garantis au micromètre.

Comme on le voit sur la figure 3, de préférence, le canal interne 121 des ferrules 120 présente une extrémité conique 123, pour faciliter l'insertion des fibres optiques dans lesdites ferrules.

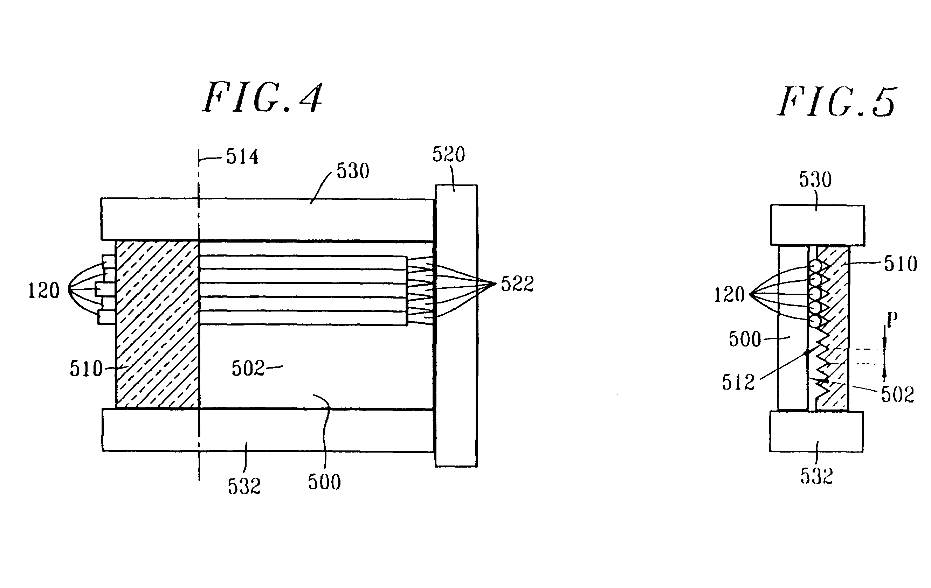

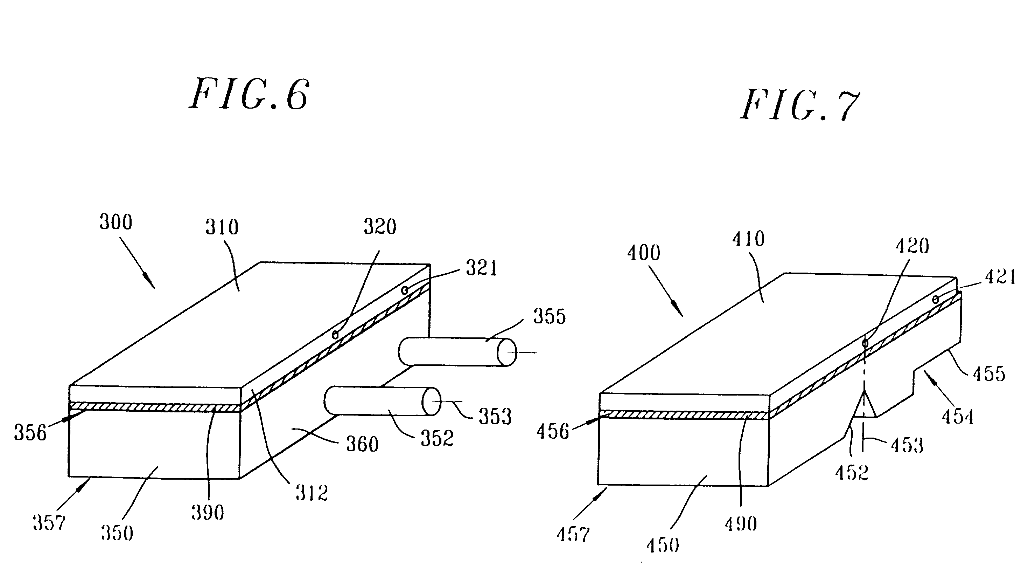

Pour réaliser une plaquette 110 à n canaux destinée à recevoir les fibres, sur un même plan et à un pas p précis, on positionne, comme illustré sur les figures 4 et 5, n ferrules 120 sur une surface de référence plane 502 formée sur une pièce 500.

Plus précisément, les n ferrules 120 sont appliquées sur la surface de référence 502 à l'aide d'une plaquette 510 de grande précision possédant des rainures en V 512 de profondeur et de pas p très précis.

Cette plaquette 510 peut être du type de celle utilisée dans les procédés classiques de l'art antérieur, c'est-à-dire par exemple une plaquette de silicium gravée. Une telle plaquette de silicium gravée 510 est certes onéreuse. Cependant dans le cadre de l'invention, cette plaquette 510 ne sert qu'à positionner les ferrules 120. Elle n'est pas intégrée à l'ensemble de connexion et peut par conséquent être réutilisée un nombre illimité de fois.

En extrémité des ferrules 120, plus précisément en regard des extrémités coniques 123 de celles-ci, on positionne une cale 520 possédant des cônes 522 disposés au même pas p que les rainures 512 prévues dans la plaquette 510. Les cônes 522 sont engagés dans les extrémités coniques 123 des ferrules 120 et possèdent la même conicité que celles-ci. Ainsi, les cônes 522 obturent les entrées 123 des ferrules 120.

La plaque de référence 500 est par ailleurs équipée de deux murets latéraux 530, 532. Après avoir ainsi disposé les ferrules 120, la plaquette rainurée 510 et la cale 520, on procède à un surmoulage sur les ferrules 120, entre les murets 530, 532, la cale 520 et la plaquette rainurée 510.

Ce surmoulage permet de réaliser la plaquette 110. Après ce surmoulage, on procède au sciage des extrémités des ferrules 120 qui dépassent de la plaquette 110. Le plan de sciage correspond au plan référencé 514 sur la figure 4, lequel plan 514 correspond au plan de jonction entre la plaquette surmoulée 110 et la pièce rainurée 510.

On obtient ainsi une plaquette 110 en matière thermoplastique comprenant différentes ferrules 120 d'axes 124 parallèles et coplanaires. Les ferrules 120 sont disposées dans des canaux 125 qui débouchent respectivement sur la face 112 précitée de la plaquette 110 et sur la face 114 opposée de celle-ci.

Plus précisément, au niveau de leurs extrémités coniques 123, les ferrules 120 débouchent dans des cônes de pré-centrage 115 formés par les cônes 522, lesquels cônes de pré-centrage 115 débouchent eux-mêmes sur la face extérieure 114 de la plaquette 110. En revanche, au niveau de leur seconde extrémité, les ferrules 120 affleurent la surface externe 112 de la plaquette 110.

La plaquette 110 ainsi réalisée est disposée sur un support 150. De préférence, le support 150 a la forme générale d'un parallélépipède rectangle. Le support 150 possède deux faces principales planes et parallèles 156, 157.

La plaquette 110 est disposée sur la face 156 du support 150.

Sur sa seconde face 157, le support 150 est équipé de moyens de positionnement mécaniques.

Plus précisément encore, de préférence, le support 150 comprend sur sa face 157 une rainure en V 152. La rainure en V 152 est placée de préférence dans un plan de symétrie 153 du support 150 orthogonale aux faces précitées 156, 157.

En outre, le support 150 possède sur la même face 157 un décrochement 154 adjacent à l'une des faces latérales 158 du support. Ce décrochement 154 définit une surface d'appui plane 155 parallèle aux faces 156 et 157 principales du support 150 et qui aboutit sur la surface latérale 158 de celui-ci.

Il faut noter que la rainure 152 et le décrochement 154 n'ont pas besoin, dans le cadre de l'invention, de précisions dimensionnelles. Il leur est seulement demandé des qualités géométriques de planéité.

On notera que de préférence, le support 150 est également muni au niveau de sa face transversale 160 orthogonale aux faces principales 156, 157 et à la face latérale 158 précitées, et qui coïncide avec la face 112 précitée de la plaquette 110, d'un décrochement 162 adjacent à sa surface inférieure 157. Ce décrochement 162 a pour but de faciliter le polissage incliné de la face 112 de la plaquette 110 et de la face 160 correspondante du support 150, ainsi que des extrémités des ferrules 120, comme on le décrira par la suite.

L'ensemble ainsi formé comprenant la plaquette 110 disposée sur le support 150 est ensuite placé sur un embout de référence 300 du type représenté sur la figure 6.

Cet embout de référence 300 comprend une plaque de référence 310 et une embase de référence 350.

La plaque de référence 310 comprend deux guides optiques 320, 321. Ces guides optiques 320, 321 peuvent être formés de fibres optiques, éventuellement de fibres optiques placées dans des ferrules similaires aux ferrules 120 précitées, ou encore peuvent être réalisées selon la technologie d'optique planaire.

Les guides optiques 320, 321 ont leur sortie sur une face commune 312 de la plaque de référence 310. Ces sorties correspondent à la configuration prédéterminée des ferrules 120 placées dans la plaquette 110.

L'embase de référence 350 comprend quant à elle des moyens de positionnement mécanique complémentaires de la rainure 152 et de la surface d'appui 155 formés sur le support 150.

Selon le mode de réalisation préférentiel représenté sur la figure 6, ces moyens de positionnement mécanique formés sur l'embase de référence 350 comprennent deux piges de précision cylindriques 352, 355. Les deux piges 352, 355 ont de préférence leurs axes parallèles. Elles font saillie sur une face latérale transversale 360 de l'embase support 350. De préférence les piges 352, 355 ont des diamètres identiques.

Les axes des piges 352, 355 sont parallèles aux faces principales 356, 357 de l'embase support 350 et orthogonaux à la face transversale 360 de celle-ci.

De préférence, l'un des guides optiques de référence 320 est placé dans un plan de symétrie de l'embase 350 perpendiculaire aux faces 356, 357 et 360 précitées de l'embase 350. Par ailleurs, ce plan de symétrie coïncide de préférence avec l'axe 353 de la pige 352.

Par ailleurs, le guide optique 321 correspond de préférence au guide le plus externe dans ladite configuration prédéterminée retenue.

Les axes des sorties des guides optiques 320, 321 sont placés dans un plan parallèle au plan passant par les axes des piges 352, 355. Enfin, la distance séparant les axes des sorties des guides optiques 300, 321 est de préférence égale à la distance séparant les axes des piges 352, 355. En d'autres termes, les guides optiques 320, 321 sont disposés respectivement à la verticale des piges 352, 355 et l'entraxe entre le guide 320 et la pige 352 est égal à l'entraxe entre le guide 321 et la pige 355.

Ainsi, l'entraxe entre les deux guides optiques 321 est un multiple du pas p de la configuration retenue.

Selon la représentation donnée sur la figure 6, la plaque de référence 310 est fixée sur l'embase support de référence 350 à l'aide d'une couche de colle intermédiaire 390, voire par soudure ou toute technique équivalente.

En variante cependant, on peut bien entendu prévoir de réaliser la plaque de référence 310 et l'embase support de référence 350 sous forme d'une pièce unitaire.

On notera que de préférence, sur l'ensemble 100, la profondeur de la rainure en V 152 et du décrochement 154, sont adaptés de telle sorte que lorsque cet ensemble 100 repose sur l'embout de référence 300, le plan passant par les axes des ferrules 120 soit parallèle au plan contenant les axes des piges 352, 355 et coïncide avec le plan passant par les axes des guides optiques de référence 320,321.

Après avoir ainsi positionné la plaquette 110 sur le support 150, en respectant la symétrie des ferrules 120 par rapport à la rainure 152, l'ensemble plaquette 110/support 150 est placé sur l'embout de référence 300. Grâce à la coopération définie entre les piges 352, 355 et respectivement la rainure 152 et la surface d'appui 355, le support 150 est placé dans une position univoque par rapport à l'embase support 350 de référence et par conséquent par rapport à la plaque de référence 310 qui lui est liée.

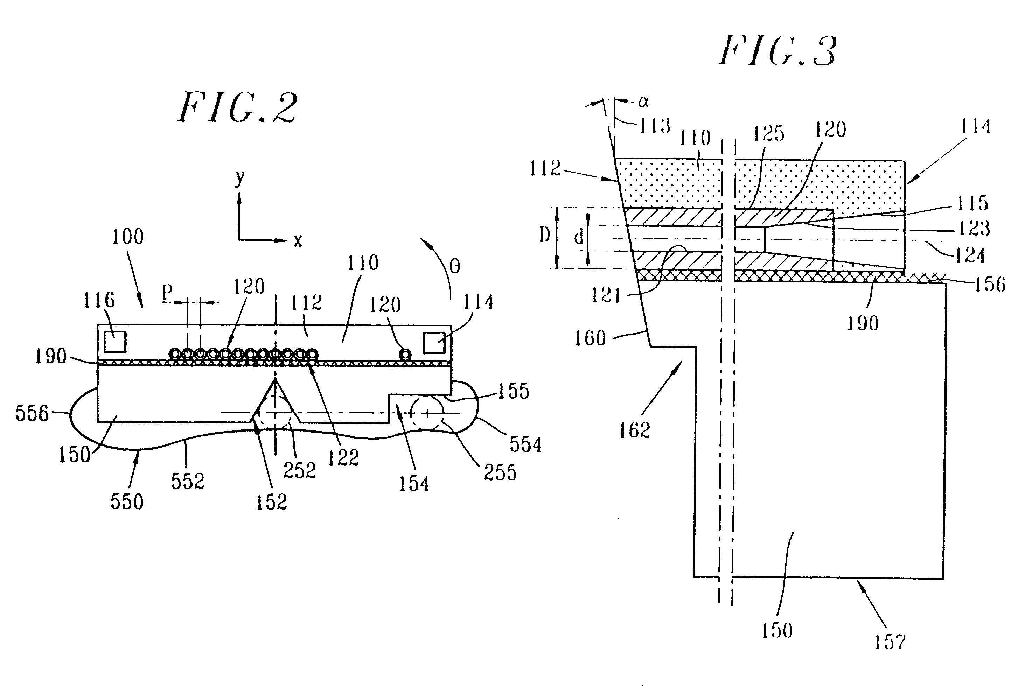

Par micro-déplacements relatifs entre la plaquette 110 et le support 150 en x, y, en flux transmis par exemple, on optimise le positionnement de la ferrule centrale 120 sur le guide optique central de référence 320. Par micro-déplacements x, y, on entend un déplacement relatif entre la plaquette 110 et le support 150, dans deux directions orthogonales entre elles, et orthogonales aux axes des piges 352, 355, l'une x parallèle aux faces principales 156, 157 du support et l'autre y orthogonale à ces faces principales 156, 157, comme cela est illustré sur la figure 2.

Par ailleurs, par "flux transmis", on entend que la puissance du flux transmis entre la ferrule centrale 120 et le guide optique 320 est contrôlée pendant cette micro-manipulation.

Puis, toujours par contrôle sous flux transmis par exemple, on procède à une rotation relative entre la plaquette 110 et le support 150, autour d'un axe sensiblement confondu avec le guide optique central 320, comme cela est illutré schématiquement sous la référence θ sur la figure 2. Cette rotation permet d'ajuster la ferrule extérieure 120 en regard du guide de référence extérieur 321.

Une fois ces opérations réalisées, on assure ainsi que les ferrules 120 occupent par rapport aux moyens de positionnement mécaniques 152, 155 la même position relative que les guides de référence 320, 321 de l'embout de référence, par rapport aux piges 352, 355.

On fige alors la position relative de la plaquette 110 et du support 150, par tout moyen classique approprié, par exemple par soudure, ou encore par collage à l'aide d'une couche intermédiaire 190 de colle placée entre la plaquette 110 et le support 150.

Il faut noter que le pré-alignement sur la ferrule centrale 120 garantit une répartition symétrique des déplacements dus aux variations dimensionnelles liées aux effets thermiques et donc un minimum d'écart par rapport à la position initiale optimisée.

L'ensemble 100 précédemment décrit est alors prêt à l'utilisation.

On procède de façon similaire à la préparation de l'ensemble 200 comprenant le substrat 210.

Le substrat 210 se présente ainsi sous forme d'une plaquette plane possédant différents guides optiques 220 dont les sorties 222 sont disposées sur une face commune 212, selon la même configuration prédéterminée et avec le même pas p contrôlé avec précision que les ferrules 120 placées sur la plaquette 110. Les technologies d'optique intégrées, qui utilisent généralement des techniques de photolithographie et masquage garantissent aujourd'hui la réalisation de guides optiques 220 à des pas d'une très grande précision (inférieur à 0,5µm). La profondeur des guides optiques 220, obtenue généralement par diffusion ou par dépôt de matériaux, ou encore par attaque sélective, permet également une précision inférieure au micromètre.

De façon comparable à l'ensemble 100, le substrat 200 est positionné sur un support 250. Le substrat 210 peut être fixé directement sur le support 250. Cependant de préférence, le substrat 210 est préalablement fixé sur une pièce support intermédiaire 270. Cette pièce intermédiaire 270 est destinée à servir de compensation dimensionnelle du fait que la hauteur des substrats 210 peut être sensiblement différente d'un substrat à l'autre en fonction des technologies utilisées. De préférence, cette pièce intermédiaire 270 a la forme d'un profilé de section droite en L. La pièce intermédiaire 270 comprend deux ailes orthogonales 272, 274. L'aile 272 de plus grande longueur sert de support au substrat 210 par sa surface externe 273. L'aile 274 de plus faible longueur définit quant à elle, par sa surface interne 275, une surface de référence, perpendiculaire aux axes des guides optiques 220 et qui sert de butée au support 250.

Le substrat 210 peut être fixé sur le support intermédiaire 270 par tout moyen classique approprié.

De façon comparable à l'embase de référence 350 de l'embout 300 précédemment décrite, le support 250 possède des moyens de positionnement mécaniques aptes à coopérer avec la rainure en V 152 et la surface d'appui 155 de l'ensemble 100.

Ainsi, le support 250 qui se présente sous la forme générale d'un parallélépipède rectangle comprend deux piges de précision 252, 255 en saillie sur la face transversale 260 du support 250.

Les piges 252, 255 peuvent être identiques dans leur géométrie, dimension et disposition relatives, aux piges 352, 355 précitées. Pour cette raison, les piges 252, 255 ne seront pas décrites plus en détail par la suite.

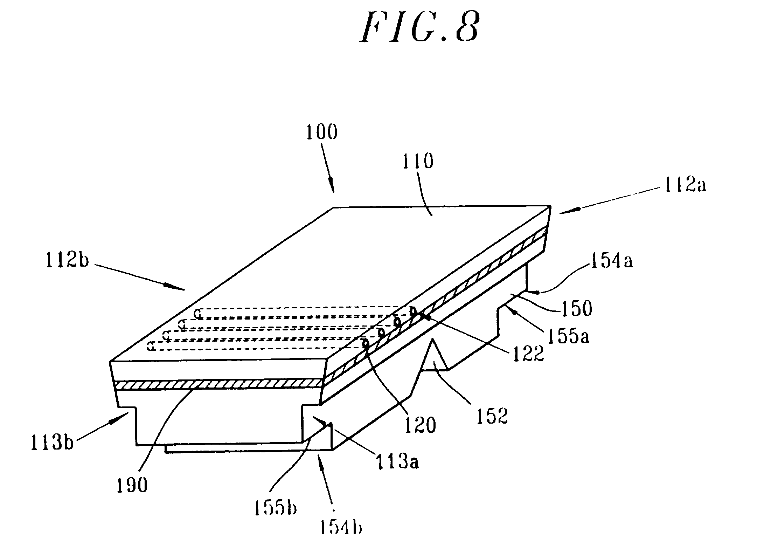

L'ensemble 200 comprenant la plaquette 210 disposée sur le support 250 et le support intermédiaire 270 est ensuite placé sur un embout de référence 400 complémentaire du type représenté sur la figure 7 annexée.

Cet embout de référence 400 comprend une plaque de référence 410 et une embase support de référence 450.

La plaque de référence 410 comprend deux guides optiques de référence 420, 421, respectivement homologues des guides optiques 320, 321 prévus sur l'embout de référence 300. En d'autres termes, les guides optiques 420, 421 sont disposés selon la même configuration prédéterminée que les guides 320, 321.

L'embase support 450 quant à elle comprend des moyens de positionnement mécanique 452, 454, 455, complémentaire des piges 252, 255 prévues sur le support 250. Ces moyens de positionnement mécaniques 452, 454, 455, sont identiques à la rainure 152, au décrochement 154 et à la surface d'appui 155 prévus sur le support 150 précité.

Ainsi, le support 450 comprend une rainure en V 452 et un décrochement 454 délimitant une surface d'appui 455, qui débouchent sur sa surface inférieure 457. Le guide optique 420 et la rainure 452 sont de préférence disposés dans le plan de symétrie 453, de l'embout 400.

La plaquette 410 est fixée sur la surface supérieure 456 de l'embase support 450 par tout moyen approprié, par exemple par soudure, ou collage à l'aide d'une couche de colle intermédiaire 490.

Le positionnement relatif des guides 420, 421 par rapport aux moyens de positionnement mécaniques 452, 455 est tel que lorsque l'embout de référence 400 est placé sur les piges 352, 355 de l'embout de référence 300, les guides optiques 420, 421 sont respectivement alignés sur les guides optiques 320, 321.

Après avoir placé, de ce fait, l'embout de référence 400 sur les piges 252, 255 du support 250 de l'ensemble 200, on procède à nouveau à un micro-déplacement en x, y, du substrat 210 par rapport au support 250 afin d'aligner, par exemple sous contrôle en flux transmis, le guide optique central 220 sur le guide optique de référence central 420. Puis, on procède par rotation relative du substrat 210 par rapport au support 250 autour d'un axe coïncidant sensiblement avec celui du guide de référence central 420, à un alignement du guide optique externe 220 sur le guide optique de référence 421.

Une fois ces opérations réalisées, les guides optiques 220 prévus sur le substrat 210 occupent la même position relative, par rapport aux piges 252, 255 que les guides de référence 420, 421 par rapport à la rainure 452 et à la surface d'appui 455.

Le substrat 210 et le support 250 sont alors figés dans cette position optimisée, par soudure, ou par collage à l'aide d'une couche intermédiaire 290 intercalée entre le support intermédiaire 270 et le support 250.

Dans l'hypothèse de la mise en oeuvre précédemment décrite, les deux ensembles 100 et 200 ont été positionnés chacun par rapport à des embouts de référence universels complémentaires 300, 400. Ainsi, pour les deux ensembles 100 et 200, les ferrules 120 et guides optiques 220 occupent une position précise universelle par rapport aux moyens mécaniques de positionnement 152, 155 et respectivement 252, 255.

Les deux ensembles 100 et 200 sont donc eux-mêmes universels et peuvent se combiner ou s'intermarier par famille.

Il est vrai que la précision de l'alignement guides 220, fibres contenues dans les ferrules 120 est assurée par une opération d'optimisation par flux transmis, non trivial. Cependant, il faut remarquer que dans le cadre de l'invention, cette opération est faite une fois pour l'ensemble 100 et une fois pour l'ensemble 200 alors que plusieurs dizaines de guides 220 peuvent ensuite être connectés simultanément. De ce fait, par rapport à l'état de la technique, le coût relatif des deux opérations est divisé par le nombre de fibres connectées.

Selon une variante de la mise en oeuvre précitée, on peut, après avoir positionné l'un des éléments 100 ou 200 par rapport à un embout de référence 300, 400, positionner le second élément 200 ou 100 par rapport à celui complémentaire 100 ou 200 positionné préalablement par rapport à l'embout de référence 300, 400.

Selon encore une autre variante, lorsque l'universalité des deux ensembles 100, 200 n'est pas demandée, on peut figer arbitrairement l'un de ces ensemble, 100 ou 200, en fixant arbitrairement sa plaquette 110 ou 210 par rapport à son support 150 ou 250, et procéder ensuite par micro-manipulations en x, y, et θ, au positionnement de la seconde plaquette par rapport à la première. Dans ce cas, les opérations délicates de micro-positionnement ne sont opérées que sur l'un des deux ensembles 100 ou 200.

Bien entendu l'alignement dynamique, sur un ensemble 100, 200 ou sur les deux ensembles 100 et 200 peut être opéré en utilisant des guides, et des ferrules munies de fibres, prévues pour le fonctionnement du composant, ou à l'aide de guides et ferrules munies de fibres qui sont prévus uniquement pour cette opération d'optimisation.

Dans le but d'obtenir un composant dont les caractéristiques sont stables avec la température, indépendamment de l'opération du centrage V 152-pige 252, dans l'axe des deux ensembles, on choisira de préférence des dimensions pour le support 150, l'embase support 250 et la pièce support intermédiaire 270, les plus faibles possibles, ainsi que des matériaux avec des coefficients de dilatation, et des modèles d'Young compatibles avec l'effet recherché.

Pour obtenir des coefficients de réflexion faibles de ces composants, caractéristiques optiques importantes pour certaines applications en télécommunication, on pourra préparer les faces 112, 212 des plaquettes 110, 210 sur lesquelles débouchent les sorties 122, 222 des ferrules 120 et guides optiques 220, en usinant ces faces 112, 212 avec un angle a par rapport à un plan 113, 213 orthogonal aux axes des ferrules 120 et guides 220. Plus précisément, lesdites faces 112 et 212 des plaquettes complémentaires 110 et 210 sont usinées avec des angles α complémentaires, c'est-à-dire des angles identiques en valeur absolue mais de signes contraires.

Le câblage définitif des fibres optiques dans les ferrules 120 peut être opéré en usine, ou encore sur chantier.

Dans le cas de l'invention, on peut également prévoir de réaliser un embout formant connecteur conçu d'un côté pour être connecté à un composant 200 comprenant un substrat 210 type OEIC, et de l'autre côté à un connecteur standard, par exemple monofibre.

Le polissage des ensembles 100 munis des fibres et le polissage du substrat 210 doivent être opérés avec un montage permettant la réalisation de l'angle a défini plus haut. Pour cela, le décrochement 162 formé dans le support 150 facilite le polissage. Pour les mêmes raison, de préférence la face transversale 260 du support 250 est de préférence placée en retrait de la face transversale 276 du support intermédiaire 270 qui coïncide avec la face de sortie 212 du substrat 210.

Les deux ensembles 100, 200 préparés comme indiqué précédemment, peuvent être assemblés l'un à l'autre par tout moyen approprié. De préférence, les deux ensembles 100, 200 sont assemblés en assurant un plaquage élastique des deux piges 252, 255, respectivement dans la rainure en V 152 et contre la surface d'appui 155, par l'intermédiaire d'une lame ressort 550.

Cette lame ressort 550 a de préférence une forme générale en U comprenant une âme centrale 552 et deux branches latérales 554, 556.

L'âme centrale 552 prend appui sur les piges 252, 255. Les branches latérales 554, 556, incurvées sont adaptées pour venir en prise avec les surfaces latérales longitudinales du support 150.

Par ailleurs, pour assurer une proximité entre les sorties 122, 222 respectivement des fibres optiques placées dans l'ensemble 100, et des guides optiques 220 prévus sur le substrat 210, sans contact, ceci pour éviter la détérioration des faces de sortie 122, 222, si on admet un grand nombre de connexions/déconnexions notamment, on pourra fixer, sur l'une au moins des faces de sortie 112, 212 des plaquettes 110, 210, deux pastilles 114, 116 représentées par exemple sur la figure 2. Ces pastilles 114, 116 possèdent une épaisseur égale à l'intervalle requis entre lesdites sorties 122, 222 des moyens optiques.

Un gel d'adaptateur d'indice ou une colle peuvent être interposés entre les deux ensembles 100, 200 pour améliorer les qualités optiques de transmission.

L'utilisation de ce gel ainsi que le référentiel isostatique sans jeu défini entre la rainure en V 152, la sortie d'appui 155 et les deux piges 252, 255 garantissent une stabilité excellente lors des éventuelles connexions et déconnexions du système.

On peut envisager notamment deux applications particulières schématisées sur la figure 1, dans le cadre de l'invention.

Si la plaquette de substrat 210 comporte uniquement des guides planaires passifs 220a, on pourra, de façon symétrique, préparer les deux faces transverales 212, 214 du substrat, afin de positionner précisément des ensembles de connexion de fibres optiques, comparables à l'ensemble 100 référencé sur la figure 1, respectivement en regard des deux extrémités des guides 220a, c'est-à-dire respectivement en regard des faces transversales 212 et 214 de la plaquette de substrat 210. Dans ce cas, la plaquette de substrat 210 est associée à deux supports intermédiaires 270 et deux supports 250 symétriques. Les positionnements relatifs entre la plaquette de substrat 210 et respectivement ces deux supports 250 symétriques équipés chacun de piges 252, 255, sont opérés par micromanipulations x, y et θ en regard d'un embout de référence, comme indiqué précédemment.

Une application spécifique peut consister par exemple dans le raccordement de coupleurs primaires une entrée/deux sorties, par connexion d'une seule fiche correspondant à des dizaines de coupleurs unitaires.

Selon d'autres applications, le substrat 210 peut comprendre des guides optiques 220b positionnés devant des composants actifs 221. Dans ce cas, la plaquette 210 n'est associée qu'à un seul support 250 et le seul traitement de la face de sortie 212 est suffisante pour autoriser ensuite la connexion de l'ensemble 200 avec l'ensemble 100 complémentaire.

Comme on l'a représenté sur la figure 8 annexée, on peut prévoir des supports 150 comportant une rainure en V axiale 152, dans le plan de symétrie, et deux décrochements 154a, 154b formant chacun une surface d'appui 155a, 155b débouchant sur la même face inférieure 157 et disposés de part et d'autre du plan de symétrie 153. Un tel support 150 autorise une connexion avec un ensemble complémentaire type fiche droite ou fiche gauche symétrique. Un tel support comprenant deux surfaces d'appui 155a, 155b, peut être utilisé en particulier pour une connexion multifibres/multifibres. En d'autres termes, l'ensemble comprenant le support 150 à deux décrochements 154a, 154b, est alors disposé entre deux ensembles complémentaires recevant chacun un faisceau de multifibres à connecter.

Enfin, dans le cadre de l'invention, de préférence un corps de protection est mis en place autour du système de connexion après assemblage des ensembles 100, 200 pour assurer les caractéristiques mécaniques et d'environnement nécessaires.

Bien entendu la présente invention n'est pas limitée au mode de réalisation particulier qui viennent d'être décrits mais s'étend à toute variante conforme à son esprit.

Ainsi, par exemple on peut prévoir de réaliser les piges 252, 255 sur le support 150 portant la plaquette 110 à ferrules, et inversement de réaliser la rainure en V 152 et la surface d'appui 155 sur le support 250 associé au substrat 210.

Selon une autre variante de réalisation, on peut prévoir de réaliser des rainures 152, et surfaces d'appui 155 sur les deux substrats 150, 250 et de disposer dans ces rainures 152 et contre ces surfaces d'appui 155, des piges 252, 255 indépendantes immobilisées grâce à la lame ressort 550.

Par ailleurs, l'invention n'est pas limitée à la connexion de fibres optiques assemblées sur la plaquette 110 de l'ensemble 100, sur les guides optiques 220 d'un substrat 210. L'invention peut être mise en oeuvre également pour connecter directement deux ensembles 100 à ferrules recevant les fibres de faisceaux respectifs, ou encore pour relier indirectement deux de tels ensembles 100 à ferrules recevant les fibres de faisceaux respectifs, par l'intermédiaire d'un embout complémentaire intercalé.

## Revendications

1. Procédé de réalisation d'un ensemble de connexion optique multivoies (100; 200), notamment pour fibres optiques (110), du type comportant une pluralité de sorties optiques (122; 222) ayant une position prédéterminée précise par rapport à des moyens de positionnement mécaniques (152,155; 252,255) dudit ensemble, de façon à assurer un alignement automatique desdites sorties optiques avec celles d'un ensemble de connexion optique multivoies similaire (200; 100) après assemblage desdits deux ensembles de connexion via leurs moyens de positionnement mécaniques respectifs, ledit procédé comprenant les étapes consistant à :
- réaliser une plaquette de connexion optique multivoies (110; 210) présentant une pluralité de sorties optiques (122; 222) disposées sur une face commune (112; 212) selon une configuration prédéterminée et avec un pas (p) contrôlé avec précision,
- disposer cette plaquette de connexion (110; 210) sur un support (150; 250) pourvu de moyens de positionnement mécaniques (152, 155; 252, 255) aptes à coopérer avec des moyens de positionnement mécaniques complémentaires (352,355,252,255; 452,455,152,155) d'autres supports (300,200; 400,100),
- placer ledit support (150; 250) et ladite plaquette de connexion (110; 210) disposée dessus en regard d'un embout de référence (300; 400) comprenant d'une part, une embase de référence (350; 450) pourvue de moyens de positionnement mécaniques complémentaires (352,355; 452,455) coopérant avec ceux dudit support (150; 250) pour définir une position univoque entre ledit support et ladite embase, et d'autre part une plaque (310; 410) de référence de connexion optique multivoies fixée rigidement sur l'embase (350; 450) et comportant, sur une face commune (312; 412), au moins deux sorties optiques distantes l'une de l'autre (320,321; 420,421) disposées par rapport auxdits moyens de positionnement mécaniques complémentaires (352,355; 452,455) de ladite embase (350; 450) selon la même position prédéterminée précise qui doit être occupée, dans l'ensemble de connexion optique multivoies à réaliser (100; 200), par deux sorties optiques correspondantes (122; 222) par rapport aux moyens de positionnement mécaniques (152,155; 252,255) dudit ensemble à réaliser,
- procéder à un alignement dynamique desdites deux sorties optiques correspondantes de ladite plaquette de connexion (110; 210) respectivement sur lesdites deux sorties optiques (320, 321; 420, 421) de ladite plaque de connexion de référence (310; 410) dudit embout de référence, par trois déplacements relatifs indépendants de ladite plaquette de connexion (110; 210) par rapport à son support associé (150; 250), et
- fixer ladite plaquette de connexion (110; 210) sur son support (150; 250) lorsque ledit alignement est obtenu, l'ensemble ainsi formé par ledit support et ladite plaquette de connexion fixée dessus constituant ledit ensemble de connexion optique multivoies (100; 200).

2. Procédé de connexion optique multivoies, comprenant les étapes consistant à:
- réaliser un premier ensemble de connexion optique multivoies (100; 200) par le procédé selon la revendication 1, via l'utilisation d'un premier embout de référence (300; 400),
- réaliser un second ensemble de connexion optique multivoies (200; 100) par le procédé selon la revendication 1, via l'utilisation d'un second embout de référence (400; 300) pourvu de moyens de positionnement mécaniques complémentaires de ceux dudit premier embout de référence, et
- à assembler les deux ensembles ainsi réalisés grâce à leurs moyens de positionnement mécaniques respectifs (152, 155, 252, 255), l'assemblage ainsi réalisé se traduisant par l'alignement automatique des sorties optiques (122; 222) dudit premier ensemble de connexion (100; 200) sur les sorties optiques correspondantes (222; 122) dudit second ensemble de connexion (200; 100).

3. Procédé selon la revendication 2, caractérisé par le fait qu'il consiste à assembler deux ensembles recevant des fibres optiques respectives.

4. Procédé selon la revendication 2, caractérisé par le fait qu'il consiste à connecter un ensemble (100) recevant des fibres optiques à un ensemble (200) pourvu d'un substrat (210) pourvu de guides optiques (220).

5. Procédé selon la revendication 2, caractérisé par le fait qu'il consiste à connecter deux ensembles pourvus de fibres ou guides optiques sur un ensemble intermédiaire.

6. Procédé selon la revendication 1, caractérisé par le fait que l'embout de référence (300, 400) est un embout universel utilisé pour l'alignement successif des plaquettes de connexion (110, 210) de différents ensembles.

7. Procédé selon la revendication 1, caractérisé par le fait que l'embout de référence est formé d'un ensemble de connexion comprenant une plaquette de connexion (110, 210) et un support (150, 250).

8. Procédé selon l'une des revendications 1, 6 ou 7, caractérisé par le fait que la plaquette de connexion (110, 210, 310, 410) et l'embase de référence (150, 250, 350, 450) de l'embout de référence (100, 200, 300, 400) sont confondus sous forme d'une pièce unique.

9. Procédé selon l'une des revendications 1 et 6 à 8, caractérisé par le fait que ladite configuration prédéterminée des sorties optiques de la plaquette de connexion (110, 210) correspond à une disposition coplanaire des axes de ces sorties (122, 222).

10. Procédé selon l'une des revendications 1 et 6 à 9, caractérisé par le fait que les moyens de positionnement mécaniques complémentaires comprennent d'une part une pige cylindrique (252, 352) de précision, sur l'un du support (250) ou de l'embase de référence (350) et d'autre part une rainure en V (152, 452) sur l'autre de l'embase de référence (450) ou du support (150).

11. Procédé selon l'une des revendications 1 et 6 à 10, caractérisé par le fait que les moyens de positionnement mécaniques complémentaires comprennent en outre d'une part une pige cylindrique de précision (255, 355) sur l'un du support (250) ou de l'embase de référence (350) et d'autre part un plan d'appui (155, 455) sur l'autre de l'embase de référence (450) ou du support (150).

12. Procédé selon l'une des revendications 10 ou 11, caractérisé par le fait que les deux piges cylindriques (252, 255 ; 352, 355) sont prévues sur le support (250) ou sur l'embase (350) de référence, tandis que la rainure en V (152, 452) et le plan d'appui (155, 455) sont prévus sur l'autre de l'embase (450) de référence ou du support (150).

13. Procédé selon l'une des revendications 1 et 6 à 12, caractérisé en ce que les deux sorties alignées de la plaquette de positionnement (110, 210) comprennent une sortie (122, 222) située sensiblement dans le plan de symétrie (153) de ladite configuration prédéterminée, et une seconde sortie éloignée de ce plan de symétrie.

14. Procédé selon la revendication 10, caractérise en ce que le plan de symétrie de ladite configuration prédéterminée coïncide sensiblement avec le plan de symétrie de ladite rainure en V (152, 452) et/ou de la pige cylindrique associée (252, 352).

15. Procédé selon l'une des revendications 1 et 6 à 14, caractérisé par le fait que les trois déplacements relatifs indépendants entre la plaquette de connexion (110, 210) et le support associé (150, 250) consiste en deux micro-déplacements en x, y, selon deux axes orthogonaux entre eux et orthogonaux à l'axe des guides optiques, suivis d'une rotation autour d'un axe sensiblement confondu avec le guide optique central de ladite configuration prédéterminée.

16. Procédé selon l'une des revendications 1 et 6 à 15, caractérisé en ce qu'il comprend les étapes de fabrication d'une plaquette de connexion optique multivoies (110) à l'aide des étapes consistant à :
- placer des ferrules parallèles (120) sur une surface de référence (502),
- positionner ces ferrules (120) à l'aide d'une pièce (510) présentant des rainures en V et
- surmouler une matière thermoplastique sur les ferrules (120) ainsi positionnées.

17. Procédé selon la revendication 16, caractérisé par le fait qu'il comprend en outre l'étape consistant à placer une pièce de calage (520) en regard des extrémités des ferrules (120), laquelle pièce de calage (520) possède des coins (522) engagés dans les extrémités des ferrules (120), avant réalisation du surmoulage.

18. Procédé selon l'une des revendications 16 ou 17, caractérisé par le fait qu'il comprend en outre l'étape consistant à sectionner l'extrémité des ferrules (120) émergeant de la pièce surmoulée (110).

19. Procédé selon l'une des revendications 1 et 6 à 18, caractérisé par le fait qu'il comprend en outre l'étape consistant à usiner la face commune (112, 212) des plaquettes de connexion (110, 210) sur lesquelles débouchent les sorties (122, 222) optiques selon un plan incliné par rapport à un plan normal aux axes de ces sorties optiques.

20. Procédé selon la revendication 19, caractérisé par le fait que l'opération d'usinage est opérée sur deux faces opposées de la plaquette de connexion.

21. Procédé selon l'une des revendications 2 à 5, caractérisé par le fait qu'il consiste à assembler deux ensembles (100, 200) à l'aide d'une lame ressort conçue pour maintenir en prise les moyens de positionnement mécaniques respectifs de ces deux ensembles.

22. Procédé selon l'une des revendications 2 à 5 et 21, caractérisé par le fait qu'il consiste à en outre à placer un produit adaptateur d'indice entre les deux ensembles (100, 200) avant assemblage.

23. Procédé selon l'une des revendications 2 à 5 et 21 ou 22, caractérisé par le fait qu'il consiste en outre à placer un corps de protection autour des ensembles (100, 200) assemblés.

## Patentansprüche

1. Verfahren zur Bildung einer optischen Mehrwegverbindungsanordnung (100; 200), insbesondere für Lichtleitfasern (110), der Art mit einer Vielzahl von optischen Ausgängen (122; 222), welche eine genaue vorbestimmte Position bezüglich mechanischer Positionierungsvorrichtungen (152,155; 252,255) der Anordnung derart aufweisen, daß eine automatische Ausrichtung der optischen Ausgänge mit denjenigen einer ähnlichen optischen Mehrwegverbindungsanordnung (200; 100) nach dem Zusammenbau der beiden Verbindungsanordnungen über ihre jeweiligen mechanischen Positionierungsvorrichtungen sichergestellt wird, wobei das Verfahren die Schritte umfaßt, welche daraus bestehen:
- eine optische Mehrwegverbindungsplatte (110; 210) herzustellen, welche eine Vielzahl von optischen Ausgängen (122; 222) aufweist, welche auf einer gemeinsamen Seite (112; 212) gemäß einer vorbestimmten Konfiguration und mit einem mit Genauigkeit gesetzten Abstand (p) angeordnet sind,
- diese Verbindungsplatte (110; 210) auf einem Träger (150; 250) anzuordnen, welcher mit mechanischen Positionierungsvorrichtungen (152,155; 252,255) ausgestattet ist, welche geeignet sind, mit komplementären mechanischen Positionierungsvorrichtungen (352,355,252,255; 452,455,152,155) anderer Träger (300,200; 400,100) zusammenzuwirken,
- den Träger (150; 250) und die darauf angeordnete Verbindungsplatte (110; 210) gegenüber eines Bezugsansatzstückes (300; 400) anzuordnen, welches einerseits eine Bezugsbefestigungsfläche (350; 450), welche mit komplementären mechanischen Positionierungsvorrichtungen (352,355; 452,455) versehen ist, welche mit denjenigen des Trägers (150; 250) zusammenwirken, um eine eindeutige Position zwischen dem Träger und der Befestigungsfläche zu definieren, und andererseits eine optische Mehrwegbezugsverbindungsplatte (310; 410) aufweist, welche starr auf der Befestigungsfläche (350; 450) befestigt ist und auf einer gemeinsamen Vorderseite (312; 412) wenigstens zwei voneinander beabstandete optische Ausgänge (320,321; 420,421) aufweist, welche bezüglich der komplementären mechanischen Positionierungsvorrichtungen (352,355; 452,455) der Befestigungsfläche (350; 450) in derselben genauen vorbestimmten Position angeordnet sind, welche in der zu bildenden optischen Mehrwegverbindungsanordnung (100; 200) von zwei entsprechenden optischen Ausgängen (122; 222) bezüglich der mechanischen Positionierungsvorrichtungen (152,155; 252,255) der zu bildenden Anordnung eingenommen werden soll,
- eine dynamische Ausrichtung der beiden entsprechenden optischen Ausgänge der Verbindungsplatte (110; 210) jeweils mit den beiden optischen Ausgängen (320,321; 420,421) der Bezugsverbindungsplatte (310; 410) des Bezugsansatzstückes durch drei unabhängige relative Bewegungen der Verbindungsplatte (110; 210) bezüglich ihres zugeordneten Trägers (150; 250) vorzunehmen, und
- die Verbindungsplatte (110; 210) auf ihrem Träger (150; 250) zu befestigen, wenn die Ausrichtung erzielt ist, wobei die so von dem Träger und der darauf befestigten Verbindungsplatte gebildete Anordnung die optische Mehrwegverbindungsanordnung (100; 200) bildet.

2. Optisches Mehrwegverbindungsverfahren, welches die Schritte aufweist, welches daraus bestehen:
- eine erste optische Mehrwegverbindungsanordnung (100; 200) mit dem Verfahren gemäß Anspruch 1 unter Verwendung eines ersten Bezugsansatzstückes (300; 400) zu bilden,
- eine zweite optische Mehrwegverbindungsanordnung (200; 100) mit dem Verfahren gemäß Anspruch 1 unter Verwendung eines zweiten Bezugsansatzstückes (400; 300) zu bilden, welches mit mechanischen Positionierungsvorrichtungen versehen ist, welche komplementär zu denjenigen des ersten Bezugsansatzstückes sind, und
- die beiden so dank ihrer jeweiligen mechanischen Positionierungsvorrichtungen (152,155; 252,255) gebildeten Anordnungen zusammenzubauen, wobei sich der so hergestellte Zusammenbau durch die automatische Ausrichtung der optischen Ausgänge (122; 222) der ersten Verbindungsanordnung (100; 200) mit den entsprechenden optischen Ausgängen (222; 122) der zweiten Verbindungsanordnung (200; 100) darstellt.

3. Verfahren gemäß Anspruch 2, dadurch gekennzeichnet, daß es daraus besteht, zwei Anordnungen zusammenzubauen, welche jeweilige Lichtleitfasern aufnehmen.

4. Verfahren gemäß Anspruch 2, dadurch gekennzeichnet, daß es daraus besteht, eine Lichtleitfasern aufnehmende Anordnung (100) mit einer Anordnung (200) zu verbinden, welche mit einem mit optischen Führungen (220) ausgestatteten Substrat (210) versehen ist.

5. Verfahren gemäß Anspruch 2, dadurch gekennzeichnet, daß es daraus besteht, zwei mit Lichtleitfasern oder optischen Führungen versehene Anordnungen auf einer Zwischenanordnung zu verbinden.

6. Verfahren gemäß Anspruch 1, dadurch gekennzeichnet, daß das Bezugsansatzstück (300, 400) ein Vietzweckansatzstück ist, welches für die aufeinanderfolgende Ausrichtung der Verbindungsplatten (110, 210) der verschiedenen Anordnungen verwendet wird.

7. Verfahren gemäß Anspruch 1, dadurch gekennzeichnet, daß das Bezugsansatzstück von einer Verbindungsanordnung gebildet ist, welche eine Verbindungsplatte (110, 210) und einen Träger (150, 250) aufweist.

8. Verfahren gemäß einem der Ansprüche 1, 6 oder 7, dadurch gekennzeichnet, daß die Verbindungsplatte (110, 210, 310, 410) und die Bezugsbefestigungsfläche (150, 250, 350, 450) des Bezugsansatzstückes (100, 200, 300, 400) in Form eines einzigen Teils übereinstimmen.

9. Verfahren gemäß einem der Ansprüche 1 und 6 bis 8, dadurch gekennzeichnet, daß die vorbestimmte Konfiguration der optischen Ausgänge der Verbindungsplatte (110, 210) einer koplanaren Anordnung der Achsen dieser Ausgänge (122, 222) entspricht.

10. Verfahren gemäß einem der Ansprüche 1 und 6 bis 9, dadurch gekennzeichnet, daß die komplementären mechanischen Positionierungsvorrichtungen einerseits einen zylindrischen Genauigkeitspeilstab (252, 352) auf dem einen Element aus Träger (250) oder Bezugsbefestigungsfläche (350) und andererseits eine V-förmige Rille (152, 452) auf dem anderen Element aus Bezugsbefestigungsfläche (450) oder Träger (150) aufweisen.

11. Verfahren gemäß einem der Ansprüche 1 und 6 bis 10, dadurch gekennzeichnet, daß die komplementären mechanischen Positionierungsvorrichtungen außerdem einerseits einen zylindrischen Genauigkeitspeilstab (255, 355) auf dem einen Element aus Träger (250) oder Bezugsbefestigungsfläche (350) und andererseits eine Auflageebene (155, 455) auf dem anderen Element aus Bezugsbefestigungsfläche (450) oder Träger (150) aufweisen.

12. Verfahren gemäß einem der Ansprüche 10 oder 11, dadurch gekennzeichnet, daß die beiden zylindrischen Peilstäbe (252,255; 352,355) auf dem Träger (250) oder der Bezugsbefestigungsfläche (350) vorgesehen sind, während die V-förmige Rille (152, 452) und die Auflageebene (155, 455) auf dem anderen Element aus Bezugsbefestigungsfläche (450) oder Träger (150) vorgesehen sind.

13. Verfahren gemäß einem der Ansprüche 1 und 6 bis 12, dadurch gekennzeichnet, daß die beiden miteinander ausgerichteten Ausgänge der Positionierungsplatte (110, 210) einen Ausgang (122, 222), welcher praktisch in der Symmetrieebene (153) der vorbestimmten Konfiguration angeordnet ist, und einen zweiten, von dieser Symmetrieebene entfernt liegenden Ausgang aufweisen.

14. Verfahren gemäß Anspruch 10, dadurch gekennzeichnet, daß die Symmetrieebene der vorbestimmten Konfiguration praktisch mit der Symmetrieebene der V-förmigen Rille (152, 452) und/oder des zugeordneten zylindrischen Peilstabes (252, 352) zusammenfällt.

15. Verfahren gemäß einem der Ansprüche 1 und 6 bis 14, dadurch gekennzeichnet, daß die drei unabhängigen relativen Verschiebungen zwischen der Verbindungsplatte (110, 210) und dem zugeordneten Träger (150, 250) aus zwei Mikroverschiebungen in x- und y-Richtung gemäß zwei zueinander und zu der Achse der optischen Führungen rechtwinklig liegenden Achsen, gefolgt von einer Drehung um eine Achse, welche praktisch mit der mittleren optischen Führung der vorbestimmten Konfiguration übereinstimmt, bestehen.

16. Verfahren gemäß einem der Ansprüche 1 und 6 bis 15, dadurch gekennzeichnet, daß es die Schritte zur Herstellung einer optischen Mehrwegverbindungsplatte (110) mit Hilfe der Schritte umfaßt, welche daraus bestehen:
- parallele Eisenhülsen (120) auf einer Bezugsfläche (502) anzuordnen,
- diese Eisenhülsen (120) mit Hilfe eines V-förmige Rillen aufweisenden Teiles (510) zu positionieren und
- ein thermoplastisches Material über die so positionierten Eisenhülsen (120) zu spritzen.

17. Verfahren gemäß Anspruch 16, dadurch gekennzeichnet, daß es außerdem den Schritt umfaßt, welcher daraus besteht, ein Verkeilungsteil (520) gegenüber den Eisenhülsen (120) anzuordnen, wobei das Verkeilungsteil (520) Keile (522) besitzt, welche vor der Durchführung des therspritzens in die Ende der Eisenhülsen (120) eingreifen.

18. Verfahren gemäß einem der Ansprüche 16 oder 17, dadurch gekennzeichnet, daß es außerdem den Schritt umfaßt, welcher daraus besteht, das aus dem überspritzen Teil (110) herausragende Ende der Eisenhülsen (120) zu zerteilen.

19. Verfahren gemäß einem der Ansprüche 1 und 6 bis 18, dadurch gekennzeichnet, daß es außerdem den Schritt umfaßt, welcher daraus besteht, die gemeinsame Vorderseite (112, 212) der Verbindungsplatten (110, 210) zu bearbeiten, auf welche die optischen Ausgänge (122, 222) entlang einer Ebene münden, welche bezüglich einer zu den Achsen dieser optischen Ausgänge senkrecht liegenden Ebene geneigt ist.

20. Verfahren gemäß Anspruch 19, dadurch gekennzeichnet, daß der Bearbeitungsvorgang auf zwei gegenüberliegenden Seiten der Verbindungsplatte durchgeführt wird.

21. Verfahren gemäß einem der Ansprüche 2 bis 5, dadurch gekennzeichnet, daß es daraus besteht, zwei Anordnungen (100, 200) mit Hilfe eines Federblattes zusammenzubauen, welches dafür eingerichtet ist, die jeweiligen mechanischen Positionierungsvorrichtungen dieser beiden Anordnungen im Eingriff zu halten.

22. Verfahren gemäß einem der Ansprüche 2 bis 5 und 21, dadurch gekennzeichnet, daß es außerdem daraus besteht, vor dem Zusammenbau eine Indexanpassungsvorrichtung zwischen den beiden Anordnungen (100, 200) anzuordnen.

23. Verfahren gemäß einem der Ansprüche 2 bis 5 und 21 oder 22, dadurch gekennzeichnet, daß es daraus besteht, einen Schutzkörper um die zusammengebauten Anordnungen (100, 200) anzuordnen.

## Claims

1. Multichannel optical connection process (100, 200), in particular for optical fibres (110), of the type comprising a plurality of optical outlets (122; 222) having a precise predetermined position relative to mechanical positioning means (152, 155; 252, 255) of said connection to assure automatic alignment of said optical outlets with those of a similar multichannel optical connection (200; 100) after assembling said two connections via their respective mechanical positioning means, said method comprising the steps of:
- making a multichannel optical connection wafer (110; 210) having a plurality of optical outlets (122; 222) disposed on a common face (112; 212) in a predetermined configuration and with a precise pitch (p),
- disposing said connection wafer (110; 210) on a support (150; 250) having mechanical positioning means (152, 155; 252, 255) adapted to cooperate with complementary mechanical positioning means (352, 355, 252, 255; 452, 455, 152, 155) of other supports (300, 200; 400, 100),
- placing said support (150; 250) and said connection wafer (110; 210) disposed on top of it facing a reference termination (300; 400) comprising, on the one hand, a reference base (350; 450) having complementary mechanical positioning means (352, 355; 452, 455) adapted to cooperate with those of said support (150; 250) to define a unique relative position between said support and said base, and, on the other hand, a multichannel optical channel reference plate (310; 410) fixed rigidly to the base (350; 450) and having on a common face (312; 412) at least two optical outlets (320, 321; 420, 421) spaced from each other and disposed relative to said complementary mechanical positioning means (352, 355; 452, 455) of said base (350, 450) with the same precise predetermined position relative to the mechanical positioning means (152, 155; 252, 255) of said connection that must be occupied, in the resulting multichannel optical connection (100; 200), by two corresponding optical outlets (122; 222),
- dynamically aligning said two corresponding optical outlets of said connection wafer (110; 210) respectively to said two optical outlets (320, 321; 420, 421) of said reference connection plate (310; 410) of said reference termination by three independent movements of said connection wafer (110; 210) relative to its associated support (150; 250), and
- fixing said connection wafer (110; 210) to its support (150; 250) when said alignment is obtained, the combination of said support and said connection wafer fixed on top of it constituting said multichannel optical connection (100; 200).

2. Multichannel optical connection process, comprising the steps of:
- making a first multichannel optical connection (100; 200) by the method according to claim 1, using a first reference terminal (300; 400),
- making a second multichannel optical connection (200; 100) by the method according to claim 1 using a second reference termination (400; 300) provided with mechanical positioning means complementary to those of said first reference termination, and
- assembling the resulting two connections by means of their respective mechanical positioning means (152, 155; 252, 255), the resulting assembly automatically aligning the optical outlets (122; 222) of said first connection (100; 200) with the corresponding optical outlets (222; 122) of said second connection (200; 100),

3. Process according to claim 2 consisting in assembling together two assemblies receiving respective optical fibres.

4. Process according to claim 2 consisting in connecting an assembly (100) receiving optical fibres to an assembly (200) having a substrate (210) having optical waveguides (220).

5. Process according to claim 2 consisting in connecting two assemblies having fibres or optical waveguides to an intermediate assembly.

6. Process according to claim 1 characterised in that said reference termination (300, 400) is a universal termination used to align successive connection wafers (110, 210) of different assemblies.

7. Process according to claim 1 characterised in that said reference termination is a connection assembly comprising a connection wafer (110, 210) and a support (150, 250).

8. Process according to any one of claims 1, 6 or 7 characterised in that said connection wafer (110, 210, 310, 410) and said reference base (150, 250, 350, 450) of said reference termination (100, 200, 300, 400) constitute a single member.

9. Process according to claims 1 and 6 to 8 characterised in that said predetermined configuration of said optical outlets of said connection wafer (110, 210) corresponds to a coplanar disposition of the axes of said outlets (122, 222).

10. Process according to any one of claims 1 and 6 to 9 characterised in that said complementary mechanical positioning means comprise a precision cylindrical peg (252, 352) on said support (250) or said reference base (350) and a V-groove (152, 452) on said reference base (450) or said support (150), respectively.

11. Process according to any one of claims 1 and 6 to 10 characterised in that said complementary mechanical positioning means further comprise a precision cylindrical peg (255, 355) on said support (250) or said reference base (350) and a bearing plane (155, 455) on said reference base (450) or said support (150), respectively.

12. Process according to claim 10 or 11 characterised in that said two cylindrical pegs (252, 255; 352, 355) are on said support (250) or on said reference base (350) and said V-groove (152, 452) and said bearing plane (155, 455) is on said reference base (450) or said support (150), respectively.

13. Process according to any one of claims 1 and 6 to 12 characterised in that said two aligned outlets of said positioning wafer (110, 210) comprise an outlet (122, 222) disposed substantially in a plane of symmetry (153) of said predetermined configuration and a second outlet that is not in said plane of symmetry.

14. Process according to claim 10 characterised in that the plane of symmetry of said predetermined configuration is substantially coincident with the plane of symmetry of said V-groove (152, 452) and/or of the associated cylindrical peg (252, 352).

15. Process according to any one of claims 1 and 6 to 14 characterised in that said three independent relative displacements between said connection wafer (110, 210) and the associated support (150, 250) consists in two microdisplacements in x,y along two mutually orthogonal axes orthogonal to the axis of said optical waveguides followed by rotation about an axis substantially coincident with the central optical waveguide of said predetermined configuration.

16. Process according to any one of claims 1 and 6 to 15 comprising the steps of fabricating a multichannel optical connection wafer (110) by steps consisting in:
- placing parallel ferrules (120) on a reference surface (502),
- positioning said ferrules (120) by means of a member (510) having V-grooves, and
- moulding a thermoplastics material over the positioned ferrules (120).

17. Process according to claim 16 further comprising the step of placing a locating member (520) opposite the ends of said ferrules (120), which locating member (520) has corners (522) engaged in the ends of said ferrules (120), before carrying out said moulding step.

18. Process according to claim 16 or 17 further comprising the step of cutting the end of said ferrules (120) emerging from the moulded part (110).

19. Process according to any one of claims 1 and 6 to 18 further comprising the step of machining the common face (112, 212) of said connection wafers (110, 210) on to which said optical outlets (122, 222) open in a plane inclined to a plane normal to the axes of said optical outlets.

20. Process according to claim 19 characterised in that the machining operation is carried out on two opposite faces of said connection wafer.

21. Process according to claims 2 to 5 consisting in joining together two assemblies (100, 200) by means of a leaf spring holding the respective mechanical positioning means of said two assemblies in interengagement.

22. Process according to any one of claims 2 to 5 and 21 further consisting in placing an index matching product between said two assemblies (100, 200) before joining them together.

23. Process according to any one of claims 2 to 5 and 21 or 22 further consisting in placing a protective body around said assemblies (100, 200) when joined together.
